# EUROPEAN PATENT APPLICATION

(11) **EP 4 845 220 A1**
(43) Date of publication of application: **25.11.2026**
(21) Application number: 25751448.9
(22) Date of filing: 27.01.2025
(51) Int. Cl.: H04W 36/00

(54) **COMMUNICATION METHOD, APPARATUS AND SYSTEM**

(30) Priority: 08.02.2024 CN 202410178313
(71) Applicant: Huawei Technologies Co., Ltd., Shenzhen, Guangdong 518129 (CN)
(72) Inventor: CHEN, Ying, Shenzhen, Guangdong 518129 (CN); XU, Bin, Shenzhen, Guangdong 518129 (CN); ZHANG, Jiayin, Shenzhen, Guangdong 518129 (CN)
(74) Representative: Huawei European IPR
(86) International application number: PCT/CN2025/075579
(87) International publication number: WO 2025/167848

(57) **Abstract**

This specification relates to the communication field, and discloses a communication method, apparatus, and system, to ensure accuracy of mobility management performed by a terminal device. The method includes: A terminal apparatus receives, from a network apparatus corresponding to a source cell, mobility management configuration information indicating a first parameter and a second parameter, and performing mobility management based on the mobility management configuration information, where the first parameter is a location-based mobility management parameter, and the second parameter is a signal quality-based mobility management parameter. The solutions of this application may be widely applied to the field of communication technologies, artificial intelligence, internet of vehicles, internet of smart home, and the like.

## Description

This application claims priority to Chinese Patent Application No. 202410178313.X, filed with the China National Intellectual Property Administration on Thursday, February 8, 2024 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

The integration of satellite communication networks and terrestrial fifth generation mobile communication technology (fifth-generation, 5G) networks provides ubiquitous coverage free from topographical constraints. This integration connects multi-dimensional spaces across space, air, land, and sea, to form an integrated ubiquitous access network, thereby enabling on-demand access across all scenarios. Satellite communication devices (that is, communication devices deployed on satellites) are in a high-speed moving state relative to terminal devices. Consequently, cells that provide services for the terminal devices also change in a short time. To ensure service continuity for the terminal devices, the satellite communication network frequently triggers the terminal devices to perform mobility management, for example, frequently triggers the terminal devices to perform cell handover or cell reselection.

Therefore, there is an urgent need for addressing how to ensure accuracy of performing mobility management by the terminal devices.

### SUMMARY

Embodiments of this application provide a communication method, apparatus, and system, to ensure accuracy of performing mobility management by a terminal device.

To achieve the foregoing objective, this application uses the following technical solutions.

According to a first aspect, an embodiment of this application provides a communication method. The method may be performed by a terminal apparatus and a functional module or a chip in a terminal apparatus. Using an example in which the method is performed by the terminal apparatus, the method includes: The terminal apparatus receives mobility management configuration information from a network apparatus corresponding to a source cell, and performing mobility management based on the mobility management configuration information. The mobility management configuration information indicates a first parameter and a second parameter, the first parameter is a location-based mobility management parameter, and the second parameter is a signal quality-based mobility management parameter.

According to the method according to the first aspect, the terminal apparatus may flexibly perform mobility management based on the received mobility management configuration information. For example, the terminal apparatus may perform, in long-time connection communication, location-based mobility management based on an indication of the mobility management configuration information, or perform signal quality-based mobility management, to select a target cell to be accessed, thereby increasing a probability of accessing an appropriate target cell.

In a possible design, that the terminal apparatus performs mobility management based on the mobility management configuration information includes: The terminal apparatus performs mobility management based on the first parameter when global navigation satellite system (global navigation satellite system, GNSS) measurement information is valid; or the terminal device performs mobility management based on the second parameter when the GNSS measurement information is invalid and within first duration. Uplink transmission of the terminal apparatus is valid within the first duration.

Based on the possible design, the terminal apparatus may determine, based on validity of the GNSS measurement information, a method for performing mobility management, so that the terminal apparatus can perform mobility management by adopting different methods in different communication scenarios, thereby improving accuracy of performing mobility management by the terminal apparatus.

In a possible design, that the terminal apparatus performs mobility management based on the second parameter when GNSS measurement information is invalid and within the first duration includes: The terminal device obtains an accumulated timing advance (timing advance, TA) of the source cell, and performs mobility management based on the accumulated TA of the source cell.

Based on the possible design, the terminal apparatus may perform mobility management based on the accumulated TA of the source cell to achieve uplink synchronization, so that the terminal apparatus no longer needs to re-obtain the GNSS measurement information to achieve uplink synchronization, thereby reducing duration of performing mobility management.

In a possible design, the first duration is validity duration of a timing advance command (timing advance command, TAC), or the first duration is a part of validity duration of a TAC.

Based on the possible design, the first duration may correspond to different durations, so that the terminal apparatus can flexibly determine the first duration in different communication scenarios, thereby improving utilization of this solution.

In a possible design, the terminal apparatus sends a request message to a network apparatus corresponding to a target cell, and correspondingly receives a first response message from the network apparatus corresponding to the target cell. The request message is used to request to configure GNSS measurement, and the first response message is used to trigger the GNSS measurement.

Based on the possible design, after accessing the target cell, the terminal apparatus may perform the GNSS measurement based on the GNSS measurement configured by the network apparatus corresponding to the target cell. In this way, the terminal apparatus does not need to perform the GNSS measurement before accessing the target cell. This ensures time validity of neighboring cell measurement, and reduces a delay of accessing the target cell.

In a possible design, the request message is carried in a message (message3, MSG3) or a radio resource control (radio resource control, RRC) connection setup request.

Based on the possible design, messages that can carry the request message in different communication scenarios are provided. Specifically, in a process in which the terminal apparatus performs cell handover, the request message may be carried in the radio resource control connection setup request; and in a process in which the terminal apparatus performs cell reselection, the request message may be carried in the MSG3. In this way, for different scenarios, different messages are used to carry the request message, and this solution is flexibly and diversely applied to various communication scenarios, thereby improving utilization of the solution.

In a possible design, the first response message is carried in downlink data. Based on the possible design, the terminal apparatus may obtain the response message via the downlink data. For example, the downlink data is a message (message 4, MSG 4).

In a possible design, the terminal apparatus releases information, in the terminal apparatus, configured by the source cell for the terminal apparatus, and starts a first timer, where running duration of the first timer corresponds to remaining validity duration of a TAC.

Based on the possible design, when the first duration is a part of the validity duration of the TAC, the terminal apparatus may determine validity of the first duration based on the running duration of the first timer, so that an available method is provided determining the validity of the first duration by the terminal apparatus, thereby improving utilization of the solution.

In a possible design, the terminal apparatus sends remaining running duration of the first timer to the network apparatus corresponding to the target cell. Based on the possible design, when the running duration of the first timer corresponds to the remaining validity duration of the TAC, the terminal apparatus sends the remaining running duration of the first timer to the network apparatus corresponding to the target cell, to trigger a response of the network apparatus corresponding to the target cell.

In a possible design, after sending the remaining running duration of the first timer to the network apparatus corresponding to the target cell, the terminal apparatus receives a second response message from the network apparatus corresponding to the target cell, where the second response message is used to trigger GNSS measurement; receives a TAC from the network apparatus corresponding to the target cell, where the TAC is used to prolong duration of uplink transmission; or performs GNSS measurement when a first moment arrives, where the first moment is determined based on a moment at which the remaining running duration of the first timer is sent.

Based on the possible design, various possible information may be received after the terminal apparatus sends the remaining running duration of the first timer to the network apparatus corresponding to the target cell, so that the terminal apparatus can perform a corresponding operation based on the received information. For example, the terminal apparatus may perform the GNSS measurement after receiving the second response message.

In a possible design, the terminal apparatus reports, to the network apparatus corresponding to the target cell, time required for performing the GNSS measurement; after the time required for performing the GNSS measurement, receives an uplink scheduling resource from the network apparatus corresponding to the target cell; and sends, on the uplink scheduling resource, indication information to the network apparatus corresponding to the target cell, where the indication information indicates validity duration of the GNSS measurement information.

Based on the possible design, the terminal apparatus may report, to the network apparatus corresponding to the target cell, time required for performing the GNSS measurement and the validity duration of the GNSS measurement information, so that the network apparatus corresponding to the target cell obtains related information of the GNSS measurement, thereby ensuring validity of the related information of the GNSS measurement in the network apparatus corresponding to the target cell.

In a possible design, the indication information is carried in a message (message5, MSG5). Based on the possible design, the terminal apparatus may send, to the network apparatus corresponding to the target cell in the MSG5, indication information indicating the validity duration of the GNSS measurement information, so that the network apparatus corresponding to the target cell receives the validity duration of the GNSS measurement information.

According to a second aspect, an embodiment of this application provides a communication method. The method may be performed by a network apparatus corresponding to a source cell and a functional module or a chip in a network apparatus corresponding to a source cell. Using an example in which the method is performed by the network apparatus corresponding to the source cell, the method includes: obtaining mobility management configuration information, where the mobility management configuration information indicates a first parameter and a second parameter, the first parameter is a location-based mobility management parameter, and the second parameter is a signal quality-based mobility management parameter; and sending the mobility management configuration information.

According to the method according to the second aspect, the network apparatus corresponding to the source cell sends the mobility management configuration information to the terminal apparatus, so that the terminal apparatus can flexibly perform mobility management based on the mobility management configuration information.

According to a third aspect, an embodiment of this application provides a communication method. The method may be performed by a network apparatus corresponding to a target cell and a functional module or a chip in a network apparatus corresponding to a target cell. Using an example in which the method is performed by the network apparatus corresponding to the target cell, the method includes: receiving a request message used to request to configure GNSS measurement, and sending a response message used to trigger the GNSS measurement.

According to the method according to the third aspect, the network apparatus corresponding to the target cell may send, based on the received request message, a first response message for performing the GNSS measurement to the terminal apparatus served by the network apparatus, so that the terminal apparatus accessing the target cell does not need to perform the GNSS measurement before accessing the target cell, thereby reducing a delay in accessing the target cell by the terminal apparatus.

In a possible design, the request message is carried in an MSG3 or an RRC connection setup request.

Based on the possible design, messages that can carry the request message in different communication scenarios are provided. Specifically, in a process in which the terminal apparatus performs cell handover, the request message may be carried in the radio resource control connection setup request; and in a process in which the terminal apparatus performs cell reselection, the request message may be carried in the MSG3. In this way, for different scenarios, different messages are used to carry the request message, and this solution is flexibly and diversely applied to various communication scenarios, thereby improving utilization of the solution.

In a possible design, the first response message is carried in downlink data. Based on the possible design, the network apparatus corresponding to the target cell may send the first response message via the downlink data. For example, the downlink data is a message (message 4, MSG 4).

In a possible design, the network apparatus corresponding to the target cell receives remaining running duration of a first timer, where running duration of the first timer corresponds to remaining validity duration of a TAC.

Based on the possible design, when the running duration of the first timer corresponds to the remaining validity duration of the TAC, the network apparatus corresponding to the target cell may receive the remaining running duration of the first timer from the terminal apparatus, and the network apparatus corresponding to the target cell is triggered to send a possible response to the terminal apparatus.

In a possible design, after receiving the remaining running duration of the first timer, the network apparatus corresponding to the target cell sends a second response message, where the second response message is used to trigger the GNSS measurement; or sends a TAC, where the TAC is used to prolong duration of uplink transmission.

Based on the possible design, various possible information may be sent after the network apparatus corresponding to the target cell receives the remaining running duration of the first timer, so that the terminal apparatus can perform a corresponding operation based on the received information. For example, the terminal apparatus may perform the GNSS measurement after receiving the second response message.

In a possible design, the network apparatus corresponding to the target cell receives, from a terminal apparatus, time required for performing the GNSS measurement; sends an uplink scheduling resource to the terminal apparatus after the time required for performing the GNSS measurement; and receives, on the uplink scheduling resource, indication information from the terminal apparatus, where the indication information indicates validity duration of the GNSS measurement.

Based on the possible design, the network apparatus corresponding to the target cell may receive the time required for performing the GNSS measurement by the terminal apparatus and validity duration of GNSS measurement information, so that the network apparatus corresponding to the target cell obtains related information of the GNSS measurement, thereby ensuring validity of the related information of the GNSS measurement in the network apparatus corresponding to the target cell.

In a possible design, the indication information is carried in an MSG5. Based on the possible design, the network apparatus corresponding to the target cell may receive, in the MSG5, indication information indicating the validity duration of the GNSS measurement information.

According to a fourth aspect, this application provides a communication apparatus. The communication apparatus may be a terminal apparatus, or a chip or a system on chip in a terminal apparatus; or may be a functional module that is in a terminal apparatus and that is configured to implement the method according to any one of the first aspect or the possible designs of the first aspect. The communication apparatus may implement the functions performed by the terminal apparatus in the first aspect or the possible designs of the first aspect, and the functions may be implemented by hardware executing corresponding software. The hardware or the software includes one or more modules corresponding to the functions. For example, the communication apparatus may include a transceiver unit and a processing unit, where
the transceiver unit is configured to receive mobility management configuration information, where the mobility management configuration information indicates a first parameter and a second parameter, the first parameter is a location-based mobility management parameter, and the second parameter is a signal quality-based mobility management parameter; and
the processing unit is configured to perform mobility management based on the mobility management configuration information.

Specifically, for an action performed by each unit of the communication apparatus, refer to any one of the first aspect or the possible designs of the first aspect. Details are not described again.

According to a fifth aspect, this application provides a communication apparatus. The communication apparatus may be a network apparatus corresponding to a source cell, or a chip or a system on chip in a network apparatus corresponding to a source cell; or may be a functional module that is in a network apparatus corresponding to a source cell and that is configured to implement the method according to any one of the second aspect or the possible designs of the second aspect. The communication apparatus may implement the functions performed by the network apparatus corresponding to the source cell in the second aspect or the possible designs of the second aspect, and the functions may be implemented by hardware executing corresponding software. The hardware or the software includes one or more modules corresponding to the functions. For example, the communication apparatus may include a processing unit and a transceiver unit, where
the processing unit is configured to obtain mobility management configuration information, where the mobility management configuration information indicates a first parameter and a second parameter, the first parameter is a location-based mobility management parameter, and the second parameter is a signal quality-based mobility management parameter; and
the transceiver unit is configured to send the mobility management configuration information.

Specifically, for an action performed by each unit of the communication apparatus, refer to any one of the second aspect or the possible designs of the second aspect. Details are not described again.

According to a sixth aspect, this application provides a communication apparatus. The communication apparatus may be a network apparatus corresponding to a target cell, or a chip or a system on chip in a network apparatus corresponding to a target cell; or may be a functional module that is in a network apparatus corresponding to a target cell and that is configured to implement the method according to any one of the third aspect or the possible designs of the third aspect. The communication apparatus may implement the functions performed by the network apparatus corresponding to the target cell in the third aspect or the possible designs of the third aspect, and the functions may be implemented by hardware executing corresponding software. The hardware or the software includes one or more modules corresponding to the functions. For example, the communication apparatus may include a transceiver unit, where
the transceiver unit is configured to receive a request message, where the request message is used to request to configure GNSS measurement; and
the transceiver unit is further configured to send a first response message, where the first response message is used to trigger the GNSS measurement.

Specifically, for an action performed by each unit of the communication apparatus, refer to any one of the third aspect or the possible designs of the third aspect. Details are not described again.

According to a seventh aspect, this application provides a communication apparatus. In a possible design, the communication apparatus includes a processor and a communication interface. The processor and the communication interface are configured to support the communication apparatus in performing the communication method in any one of the first aspect or the possible designs of the first aspect; the processor and the communication interface are configured to support the communication apparatus in performing the communication method in any one of the second aspect or the possible designs of the second aspect; or the processor and the communication interface are configured to support the communication apparatus in performing the communication method in any one of the third aspect or the possible designs of the third aspect. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the communication method according to the first aspect or any possible design of the first aspect, the communication apparatus performs the communication method according to the second aspect or any possible design of the second aspect, or the communication apparatus performs the communication method according to the third aspect or any possible design of the third aspect.

According to an eighth aspect, this application provides a communication system. The communication system includes the communication apparatus according to the fourth aspect and the communication apparatus according to the fifth aspect; the communication system includes the communication apparatus according to the fourth aspect and the communication apparatus according to the seventh aspect; the communication system includes the communication apparatus according to the fifth aspect and the communication apparatus according to the seventh aspect; the communication system includes the communication apparatus according to the fourth aspect and the communication apparatus according to the sixth aspect; the communication system includes the communication apparatus according to the sixth aspect and the communication apparatus according to the seventh aspect; the communication system includes the communication apparatus according to the fourth aspect, the communication apparatus according to the fifth aspect, and the communication apparatus according to the sixth aspect; the communication system includes the communication apparatus according to the fourth aspect, the communication apparatus according to the fifth aspect, and the communication apparatus according to the seventh aspect; the communication system includes the communication apparatus according to the fourth aspect, the communication apparatus according to the sixth aspect, and the communication apparatus according to the seventh aspect; or the communication system includes the communication apparatus according to the fifth aspect, the communication apparatus according to the sixth aspect, and the communication apparatus according to the seventh aspect.

According to a ninth aspect, this application provides a computer-readable storage medium. The computer-readable storage medium stores computer instructions. When the computer instructions are run on a computer, the computer is caused to perform the communication method in any one of the first aspect or the possible designs of the first aspect, the computer is caused to perform the communication method in any one of the second aspect or the possible designs of the second aspect, or the computer is caused to perform the communication method in any one of the third aspect or the possible designs of the third aspect.

According to a tenth aspect, this application provides a computer program product. The computer program product includes computer instructions. When the computer instructions are run on a computer, the computer is caused to perform the communication method in any one of the first aspect or the possible designs of the first aspect, the computer is caused to perform the communication method in any one of the second aspect or the possible designs of the second aspect, or the computer is caused to perform the communication method in any one of the third aspect or the possible designs of the third aspect.

### BRIEF DESCRIPTION OF DRAWINGS

FIG. 1 is a diagram of a communication system according to an embodiment of this application;
FIG. 2 is a diagram of a satellite communication system according to an embodiment of this application;
FIG. 3 is a schematic flowchart of a communication method according to an embodiment of this application;
FIG. 4 is a schematic flowchart of a TAC;
FIG. 5 is a schematic flowchart of a communication method according to an embodiment of this application;
FIG. 6 is a diagram of a structure of a communication apparatus according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

Before embodiments of this application are described, related technical terms in embodiments of this application are explained and described. It should be noted that, the following explanations and descriptions are intended to facilitate understanding of embodiments of this application, and should not be construed as any limitation on the protection scope claimed in embodiments of this application.

Mobility management is managing location information, security, and service continuity of terminal devices, to achieve an optimal status of contact between the terminal devices and networks, ensuring application of various network services. In new radio (new radio, NR), the mobility management can be classified into mobility management in connected mode and mobility management in idle mode/inactive mode. The mobility management in the connected mode includes cell handover. The mobility management in the idle mode/inactive mode includes cell reselection.

Cell handover means that a terminal device moves from one cell to another cell while in the connected mode and maintaining data transmission services, or means that due to reasons such as wireless transmission service load adjustment, activation operation maintenance, and device faults, an original serving cell (or referred to as a source cell) cannot continue to provide services for the terminal, to maintain data transmission services and quality of service, a radio bearer system searches for a most appropriate cell (or referred to as a target cell) or network to continue to provide uninterrupted services for the terminal device, thereby implementing mobility management of seamless wireless network coverage. When the terminal device is in the connected mode, the terminal device sets up a connection to a network device (for example, an access network device or a core network device), enabling data transmission at any time. Cell handover includes conditional handover (conditional handover, CHO). When the terminal device performs conditional handover, the terminal device selects, based on a measurement result of the terminal device, any cell that meets a handover condition as the target cell, and sends a random access request to the target cell.

Cell reselection means that a terminal device in the idle mode/inactive mode periodically evaluates signal quality of a plurality of cells, and selects a cell with the best signal quality for communication, to ensure that the signal quality of the cell serving the terminal device meets communication requirements. When the terminal device is in the idle mode/inactive mode, the terminal device has not set up a connection to a network device, and therefore cannot perform data transmission. After reselecting a cell with the best signal quality through cell reselection, the terminal device may access the cell with the best signal quality to perform data transmission. Cell reselection may also be replaced by cell reselection upon radio link failure (radio link failure, RLF).

With the development of information technologies, there is an increasingly urgent demand for efficient, mobile, and diverse communication. Currently, global mobile communication has become a development focus in the communication system field, and satellite communication is an important part of the global mobile communication. In some important fields such as space communication and aviation communication, satellite communication play an irreplaceable role. Satellite communication is characterized by long communication distance, large coverage area, and flexible networking, and can provide services for both fixed terminal devices and various mobile terminal devices. In satellite communication, a terminal device that is connected for a short time may perform location-based mobility management. For example, the terminal device obtains global navigation satellite system (global navigation satellite system, GNSS) measurement information, sends a random access request to a network device based on the GNSS measurement information and location information of the network device, after the terminal device accesses the network device and sends uplink data to the network device, disconnects from the network device, and exits the connected mode and enters the idle mode. In this process, the GNSS measurement information obtained by the terminal device remains valid until the terminal device exits the connected mode.

A terminal device that is connected for a long time needs to perform GNSS measurement at least once to ensure continuous communication services. When the terminal device is in the connected mode for a long time, a location of the terminal device changes. Consequently, GNSS measurement information obtained by the terminal device before sending a random access request may become invalid. Therefore, before exiting the connected mode, the terminal device needs to re-obtain the GNSS measurement information, to ensure validity of the GNSS measurement information, and then performs location-based mobility management based on the newly measured GNSS measurement information. However, re-obtaining the GNSS measurement information by the terminal device increases power consumption of the terminal device and also increases duration of performing mobility management by the terminal device. In another possible case, before exiting the connected mode, the terminal device receives a timing advance command (timing advance command, TAC) sent by the network device and used for prolonging duration of uplink transmission of the terminal device, and the terminal device performs signal quality-based mobility management within validity duration of the TAC. However, when the terminal device performs signal quality-based mobility management, there is a problem that the terminal device cannot switch to or reselect an appropriate cell.

For example, in satellite communication, when a narrowband internet of things (narrowband internet of things, NB-IoT) terminal device determines, by measuring signal quality of a source cell, that communication quality provided by the source cell for the terminal device is unacceptably poor, and the communication quality of the terminal device cannot be improved through cell handover, the NB-IoT terminal device disconnects from the source cell, so that a connection status of the NB-IoT terminal device changes from the connected mode to the idle mode, and triggers signal quality-based cell reselection. In other words, the NB-IoT terminal device measures signal quality of neighboring cells, and selects, from the measured neighboring cells, a cell with optimal signal quality as a target cell to be accessed. Further, the NB-IoT terminal device performs GNSS measurement to obtain valid GNSS measurement information, determines a timing advance (timing advance, TA) based on the GNSS measurement information and satellite ephemeris information corresponding to the target cell, and sends a random access request to the target cell based on the TA. In this case, a long time has passed since a moment at which the NB-IoT terminal device measures the signal quality of the neighboring cells, measured signal quality results of the neighboring cells are invalid, and the target cell may not be the cell with optimal signal quality in the neighboring cells, and consequently, the NB-IoT terminal device accesses an inappropriate cell. Alternatively, the NB-IoT terminal device still sends the random access request to the target cell based on the determined TA, causing an access failure. Alternatively, after the NB-IoT terminal device accesses the target cell, the NB-IoT terminal device obtains, through measurement, that communication quality provided by the target cell for the NB-IoT terminal device is still poor, and needs to perform cell handover, which introduces additional power consumption overheads.

To ensure accuracy of performing mobility management by the terminal device, this application provides a communication method. The method includes: A terminal apparatus receives, from a network apparatus corresponding to a source cell, mobility management configuration information indicating a first parameter and a second parameter; and performs mobility management based on the mobility management configuration information, where the first parameter is a location-based mobility management parameter, and the second parameter is a signal quality-based mobility management parameter. In this way, the terminal apparatus may perform location-based mobility management or signal quality-based mobility management based on an indication of the mobility management configuration information, to flexibly select a target cell to be accessed, increasing a probability of accessing an appropriate target cell.

The following describes the communication method provided in embodiments of this application with reference to the accompanying drawings in this specification.

The technical solutions in embodiments of this application may be applied to various communication systems. The communication system may be a third generation partnership project (third generation partnership project, 3GPP) communication system, for example, a long term evolution (long term evolution, LTE) system, or may be a fifth generation (fifth generation, 5G) mobile communication system, a new radio system, a satellite communication system, or a new radio vehicle-to-everything (vehicle-to-everything, NR V2X) system, may be further applied to a system in LTE and 5G hybrid networking, a device-to-device (device-to-device, D2D) communication system, a machine-to-machine (machine-to-machine, M2M) communication system, the internet of things (Internet of Things, IoT), or another next generation communication system, or may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable and low latency communication (ultra-reliable and low latency communication, URLLC), machine-type communication (machine-type communication, MTC), massive machine-type communication (massive machine-type communication, mMTC), D2D, V2X, and IoT. The technical solutions provided in embodiments of this application may be further applied to a long-distance communication scenario, for example, applied to a satellite communication scenario in which a distance between a terminal apparatus and a network apparatus continuously changes, or to another long-distance communication scenario. This is not limited.

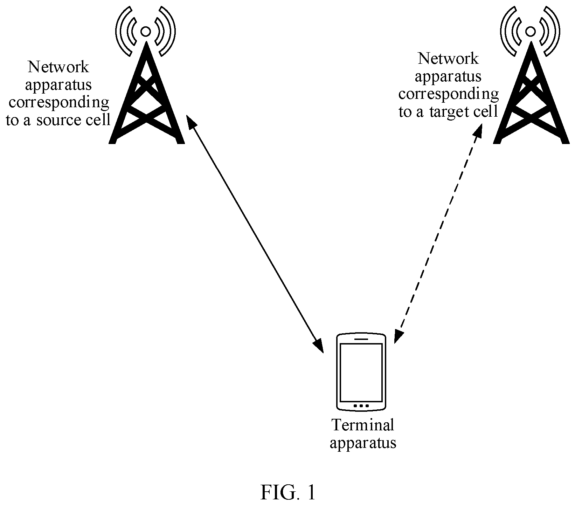

FIG. 1 is a diagram of a structure of a communication system according to an embodiment of this application. As shown in FIG. 1, the communication system may include a terminal apparatus, a network apparatus corresponding to a source cell, and a network apparatus corresponding to a target cell. The terminal apparatus in FIG. 1 may be a communication apparatus having a wireless communication function, for example, a terminal apparatus (for example, an IoT terminal apparatus) that cannot perform communication and measurement at the same time. The network apparatus corresponding to the source cell in FIG. 1 is a communication apparatus that provides services for the terminal apparatus. The network apparatus corresponding to the target cell is a communication apparatus that takes over from the network apparatus corresponding to the source cell to provide services for the terminal apparatus. The network apparatus corresponding to the source cell may be referred to as a source communication apparatus, and the network apparatus corresponding to the target cell may be referred to as a target communication apparatus.

It should be understood that, in FIG. 1, the network apparatus corresponding to the source cell may be the same as or different from the network apparatus corresponding to the target cell. For example, when the terminal apparatus performs cell handover between different cells of a same network apparatus, the network apparatus corresponding to the source cell and the network apparatus corresponding to the target cell are a same network apparatus. When the terminal apparatus performs cell handover between cells of different network apparatuses, the network apparatus corresponding to the source cell and the network apparatus corresponding to the target cell are different network apparatuses. When the network apparatus corresponding to the source cell and the network apparatus corresponding to the target cell are different network apparatuses, a direct communication link may be set up between the network apparatus corresponding to the source cell and the network apparatus corresponding to the target cell, or there may be no direct communication link. This is not limited.

It may be understood that, FIG. 1 is merely a diagram, and does not constitute a limitation on an application scenario of the technical solutions provided in this application. A person skilled in the art should understand that, in a specific implementation process, the communication system shown in FIG. 1 may include fewer apparatuses than those shown in FIG. 1, or the communication system shown in FIG. 1 may further include another apparatus. In addition, a quantity of apparatuses in the communication system shown in FIG. 1 may be determined according to specific requirements. This is not limited. The following describes the apparatuses in the system shown in FIG. 1.

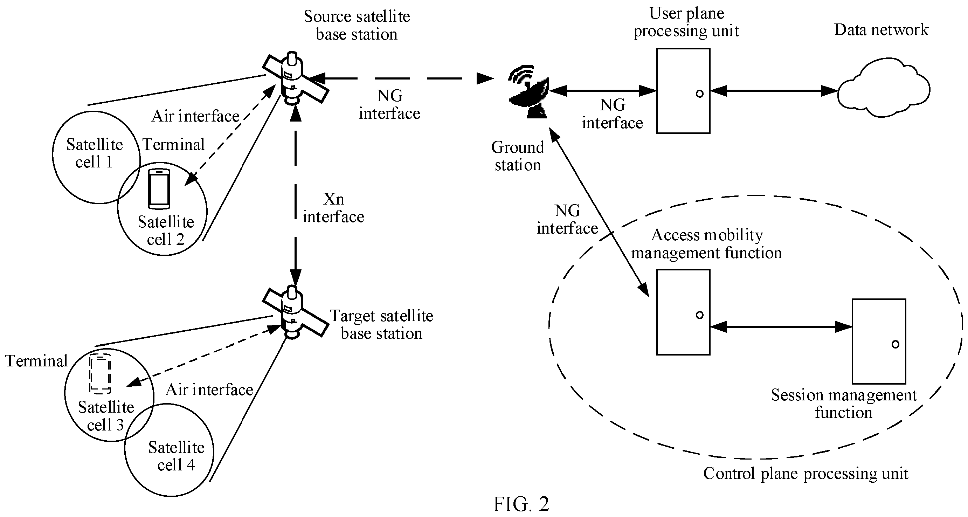

In this application, the communication system shown in FIG. 1 may be a satellite communication system. For example, the satellite communication system may be the satellite communication system shown in FIG. 2. As shown in FIG. 2, the satellite communication system may include a terminal, a source satellite base station, a target satellite base station, a ground station, a user plane processing unit, a control plane processing unit, a data network, an air interface, an Xn interface, and a next generation (next generation, NG) interface. The air interface includes various types of air interfaces (for example, a 5G air interface), and the control plane processing unit has an access mobility management function and a session management function. As shown in FIG. 2, the terminal is connected to the source satellite base station and the target satellite base station through the air interface, the source satellite base station is connected to the ground station through the NG interface, the ground station is connected to the user plane processing unit through the NG interface, and the ground station is connected to the control plane processing unit through the NG interface. In addition, when there is an available radio link between the source satellite base station and the target satellite base station, the source satellite base station and the target satellite base station may complete signaling exchange and user data transmission through the Xn interface.

In this application, the satellite base station is a base station deployed on a satellite, and a type of the base station deployed on the satellite is not limited. The base station may be a 5G base station, a base station in a future evolved communication system, or the like. In this application, the 5G base station is used as an example for description, the satellite base station may be alternatively described as a 5G base station deployed on the satellite, a satellite access network device, a satellite access network apparatus, a satellite communication apparatus, or the like. This is not limited.

The terminal may be an IoT terminal. Based on terminal capabilities, the terminal may be classified into a terminal that supports both cell handover and cell reselection (for example, a terminal supporting enhanced machine-type communication (enhanced machine-type communication, eMTC)), or a terminal that supports cell reselection but does not support cell handover (for example, an NB-IoT terminal). An IoT terminal device in satellite communication is a terminal device (for example, an eMTC terminal device or an NB-IoT terminal device) that supports access to IoT services.

The source satellite base station is a network apparatus corresponding to a source satellite cell that provides services for the terminal. The source satellite base station includes a satellite cell 1 and a satellite cell 2. The satellite cell 2 is a satellite cell that provides services for the terminal, and may also be referred to as the source satellite cell. The satellite cell 1 and the satellite cell 2 are areas covered by the source satellite base station, and the source satellite base station may provide services for the terminal in the satellite cell 1 and the satellite cell 2.

The target satellite base station is a network apparatus corresponding to a target satellite cell that takes over from the source satellite cell to provide services for the terminal. The target satellite base station includes a satellite cell 3 and a satellite cell 4, and the satellite cell 3 and the satellite cell 4 are candidate target satellite cells that take over from the source satellite cell to provide services for the terminal. The satellite cell 3 and the satellite cell 4 are areas covered by the target satellite base station, and the target satellite base station may provide services for the terminal in the satellite cell 3 and the satellite cell 4.

The terminal apparatus in this application may be a terminal device (terminal equipment) or a functional module/chip in a terminal device, and may also be user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a smart home terminal, a vehicle-mounted terminal, or the like.

The network apparatus in this application may be an access network device or a functional module/chip in an access network device, and is an apparatus in a radio access network (radio access network, RAN) that enables a terminal to access a wireless network. The RAN may be connected to a core network (for example, may be an LTE core network, or may be a 5G core network). The access network device may be a satellite base station (or a flight platform) in a non-terrestrial network (non-terrestrial network, NTN) scenario, an evolved NodeB (evolved NodeB, eNB or eNodeB) in LTE, or a base station in a 5G network or a future evolved public land mobile network (public land mobile network, PLMN), a broadband network gateway (broadband network gateway, BNG), an aggregation switch, or a non-3GPP access device. Alternatively, the access network apparatus in embodiments of this application may be a radio controller in a cloud radio access network (cloud radio access network, CRAN), a transmission and reception point (transmission and reception point, TRP), a device including a TRP, or the like. This is not specifically limited in embodiments of this application. Optionally, the base station in embodiments of this application may include base stations in various forms, for example, a macro base station, a micro base station (also referred to as a small cell), a relay station, or an access point. This is not specifically limited in embodiments of this application.

The network apparatus in embodiments of this application may be carried on or deployed on the flight platform, for example, a low-altitude flight platform, a high-altitude flight platform, or a satellite. When the network apparatus is carried on the flight platform, the network apparatus moves with the flight platform synchronously.

Optionally, the apparatuses (for example, the terminal apparatus, the network apparatus corresponding to the source cell, and the apparatus corresponding to the target cell) in FIG. 1 may also be referred to as communication apparatuses, and may be general-purpose apparatuses or dedicated apparatuses. This is not specifically limited in embodiments of this application.

Optionally, related functions of the apparatuses in FIG. 1 of this application may be implemented by one apparatus, may be jointly implemented by a plurality of apparatuses, or may be implemented by one or more functional modules in one apparatus. This is not specifically limited in embodiments of this application. It can be understood that, the foregoing function may be a network element in a hardware apparatus, a software function running on dedicated hardware, a combination of hardware and software, or a virtualization function instantiated on a platform (for example, a cloud platform).

The following describes the communication method provided in embodiments of this application with reference to the communication system shown in FIG. 1. Actions, terms, and the like in the following embodiments may be mutually referenced. Names of messages exchanged between apparatuses, names of parameters in the messages, or the like in embodiments are merely examples. Other names may alternatively be used during specific implementation. For example, "corresponding" in the following embodiments may be replaced with "associated" or the like, and "sending" in the following embodiments may be replaced with "transmission" or the like.

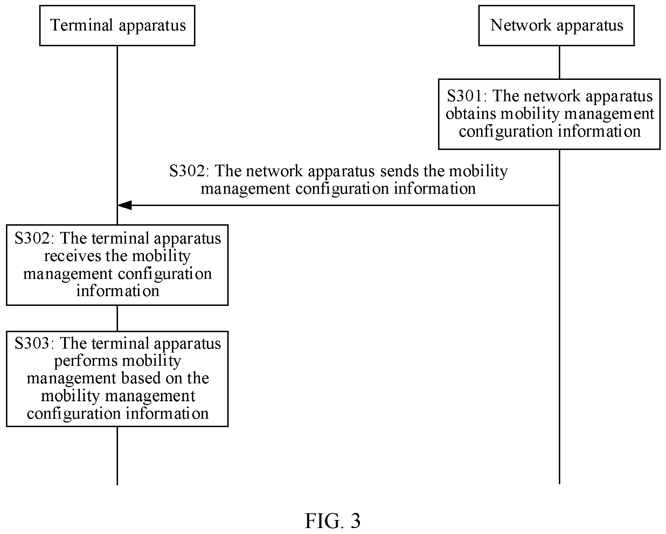

FIG. 3 is a schematic flowchart of a communication method according to an embodiment of this application. As shown in FIG. 3, the method may include step S301 to step S303.

S301. A network apparatus obtains mobility management configuration information.

The network apparatus may be a network apparatus corresponding to a source cell of a terminal apparatus.

The network apparatus may actively obtain the mobility configuration information locally. For example, the network apparatus periodically obtains the mobility configuration information locally.

The mobility management configuration information indicates a first parameter and a second parameter, the first parameter is a location-based mobility management parameter, and the second parameter is a signal quality-based mobility management parameter. The location-based mobility management parameter may include but is not limited to a location threshold corresponding to a location-based handover condition, and the signal quality-based mobility management parameter may include but is not limited to a signal quality threshold corresponding to a signal quality-based handover condition.

The location threshold may include one location threshold or two different location thresholds. The signal quality threshold may include one signal quality threshold or two different signal quality thresholds.

For example, when the location threshold includes one location threshold, and the signal quality threshold includes one signal quality threshold, the location-based handover condition may include but is not limited to the following: a relative location between the terminal apparatus and the source cell is greater than the location threshold, and/or a relative location between the terminal apparatus and a target cell is less than or equal to the location threshold. The signal quality-based handover condition may include but is not limited to the following: signal quality of the source cell is less than the signal quality threshold, and/or signal quality of the target cell is greater than or equal to the signal quality threshold.

For example, when the location threshold includes two different location thresholds, and the signal quality threshold includes two different signal quality thresholds, one location threshold corresponds to a location threshold between the terminal apparatus and the source cell, and the other location threshold corresponds to a location threshold between the terminal apparatus and the target cell, where the location threshold between the terminal apparatus and the source cell is greater than the location threshold between the terminal apparatus and the source cell; and one signal quality threshold corresponds to a signal quality threshold between the terminal apparatus and the source cell, and the other signal quality threshold corresponds to a signal quality threshold between the terminal apparatus and the target cell, where the signal quality threshold between the terminal apparatus and the source cell is less than the signal quality threshold between the terminal apparatus and the source cell.

It should be understood that, in this application, when mobility management is cell handover, the location-based handover condition may be replaced with a location-based cell handover condition, the location-based cell handover condition may be used to perform cell handover based on a location, the signal quality-based handover condition may be replaced with a signal quality-based cell handover condition, and the signal quality-based cell handover condition may be used to perform cell reselection based on signal quality. When mobility management is cell reselection, the foregoing location-based handover condition may be replaced with a location-based cell reselection measurement condition, the location-based cell reselection measurement condition may be used to perform cell reselection based on a location, the foregoing signal quality-based handover condition may be replaced with a signal quality-based cell reselection measurement condition, and the signal quality-based cell reselection measurement condition may be used to perform cell reselection based on signal quality.

Optionally, the mobility management configuration information may further include configuration information, configured by the source cell for the terminal apparatus, of a candidate target cell that can take over from the source cell to provide services for the terminal apparatus, for example, location information of the candidate target cell and a radio resource configuration parameter (for example, a reference signal) of the candidate target cell. Specifically, there may be one or more candidate target cells. For a process in which the source cell configures the candidate target cell for the terminal apparatus, refer to the conventional technologies. Details are not described herein again.

S302: The network apparatus sends the mobility management configuration information, and the terminal apparatus receives the mobility management configuration information.

The network apparatus may send the mobility management configuration information via a broadcast message or radio resource control (radio resource control, RRC) signaling.

The network apparatus may actively send the mobility management configuration information to the terminal apparatus. For example, the network apparatus may periodically send the mobility management configuration information to the terminal apparatus. Alternatively, the network apparatus may send the mobility management configuration information to the terminal apparatus in a triggered manner. For example, the network apparatus receives a request message sent by the terminal apparatus and used to request the mobility management configuration information, and then sends the mobility management configuration information to the terminal apparatus.

It should be understood that, when the terminal apparatus performs cell reselection, the network apparatus corresponding to the source cell sends the mobility management configuration information to the terminal apparatus before the terminal apparatus disconnects from the network apparatus corresponding to the source cell, so that the terminal apparatus may select, in an idle mode based on the received mobility management configuration information, a target cell to be accessed.

Optionally, after receiving the mobility management configuration information, the terminal apparatus may store the mobility management configuration information locally. In this way, when performing mobility management, the terminal apparatus may quickly obtain the mobility management configuration information, and perform mobility management based on the mobility management configuration information.

S303: The terminal apparatus performs mobility management based on the mobility management configuration information.

Optionally, the terminal apparatus may obtain GNSS measurement information, and perform mobility management based on validity of the GNSS measurement information and the mobility management configuration information. The validity of the GNSS measurement information may include that the GNSS measurement information is valid or that the GNSS measurement information is invalid.

In this application, that the GNSS measurement information is valid means that the terminal apparatus can implement uplink synchronization based on the GNSS measurement information.

In an example, when the GNSS measurement information is valid, the terminal apparatus performs mobility management based on the first parameter.

Optionally, that the terminal apparatus performs mobility management based on the first parameter may include:

The terminal apparatus determines the target cell based on the location threshold, the location-based handover condition, the relative location between the terminal apparatus and the source cell, and a relative location between the terminal apparatus and the candidate target cell, and further sends a random access request to the target cell.

Specifically, the terminal apparatus may determine whether a relationship between the location threshold and the relative location between the terminal apparatus and the source cell meets the location-based handover condition. When the relative location between the terminal apparatus and the source cell meets the location-based handover condition, the terminal apparatus may determine whether a relationship between the location threshold and the relative location between the terminal apparatus and a candidate target cell reference point meets the location-based handover condition, determine a candidate target cell that meets the location-based handover condition as the target cell, and sends the random access request to the target cell. When the relative location between the terminal apparatus and the source cell does not meet the location-based handover condition, the mobility management ends or the mobility management is not performed.

In this application, the relative location between the terminal apparatus and the source cell may be determined based on location information of the terminal apparatus and location information of a source cell reference point. The location information of the terminal apparatus indicates a location of the terminal apparatus. The location information of the terminal apparatus may include location coordinates of the terminal apparatus. The location information of the terminal apparatus may be obtained based on the GNSS measurement information of the terminal apparatus. For example, the GNSS measurement information of the terminal apparatus is the location information of the terminal apparatus. The location information of the source cell reference point indicates a location of the source cell. The location information of the source cell reference point may include location coordinates of the source cell reference point. The source cell reference point may be a cell center or another location point of the source cell. This is not limited. Specifically, the terminal apparatus may determine a difference between the location coordinates of the terminal apparatus and the location coordinates of the source cell reference point as the relative location between the terminal apparatus and the source cell, or calculate a Euclidean distance between the location coordinates of the terminal apparatus and the location coordinates of the source cell reference point, and use the calculated Euclidean distance as the relative location between the terminal apparatus and the source cell.

Similarly, in this application, the relative location between the terminal apparatus and the candidate target cell may be determined based on location information of the terminal apparatus and location information of the candidate target cell reference point. The location information of the terminal apparatus indicates a location of the terminal apparatus. The location information of the terminal apparatus may include location coordinates of the terminal apparatus. The location information of the candidate target cell reference point indicates a location of the candidate target cell. The location information of the candidate target cell reference point may include location coordinates of the candidate target cell reference point. The candidate target cell reference point may be a cell center or another location point of the candidate target cell. This is not limited. Specifically, the terminal apparatus may determine a difference between the location coordinates of the terminal apparatus and the location coordinates of the candidate target cell reference point as the relative location between the terminal apparatus and the candidate target cell, or calculate a Euclidean distance between the location coordinates of the terminal apparatus and the location coordinates of the candidate target cell reference point, and use the calculated Euclidean distance as the relative location between the terminal apparatus and the candidate target cell.

For example, when the first parameter includes one location threshold, the terminal apparatus determines, based on the location information (for example, the GNSS measurement information) of the terminal apparatus and the location information of the source cell reference point, whether the relative location between the terminal apparatus and the source cell is greater than the location threshold. When the relative location is greater than the location threshold, the terminal apparatus determines, based on the location information of the terminal apparatus and the location information of the candidate target cell reference point, whether the relative location between the terminal apparatus and the candidate target cell is less than or equal to the location threshold. If there is at least one first candidate target cell in candidate target cells, and a relative location between the terminal apparatus and the first candidate target cell is less than or equal to the location threshold, any one of the at least one first candidate target cell is selected as the target cell, and the terminal apparatus sends the random access request to the target cell. If there is no candidate target cell whose relative location is less than or equal to the location threshold in the candidate target cells, the terminal apparatus does not perform mobility management or the terminal apparatus is further in the idle mode.

For another example, when the first parameter includes a location threshold 1 and a location threshold 2, where the location threshold 1 is the location threshold between the terminal apparatus and the source cell, and the location threshold 2 is the location threshold between the terminal apparatus and the target cell, the terminal apparatus determines, based on the location information (for example, the GNSS measurement information) of the terminal apparatus and the location information of the source cell reference point, whether the relative location between the terminal apparatus and the source cell is greater than the location threshold 1. When the relative location is greater than the location threshold 1, the terminal apparatus determines, based on the location information of the terminal apparatus and the location information of the candidate target cell reference point, whether the relative location between the terminal apparatus and the candidate target cell is less than or equal to the location threshold 2. If there is at least one first candidate target cell in candidate target cells, and a relative location between the terminal apparatus and the first candidate target cell is less than or equal to the location threshold 2, any one of the at least one first candidate target cell is selected as the target cell, and the terminal apparatus sends the random access request to the target cell. If there is no candidate target cell whose relative location is less than or equal to the location threshold 2 in the candidate target cells, the terminal apparatus does not perform mobility management or the terminal apparatus is further in the idle mode.

For example, the mobility management is cell handover, the terminal apparatus is the terminal in FIG. 2, the source cell is the satellite cell 2 in FIG. 2, candidate target cells configured by the satellite cell 2 for the terminal include the satellite cell 3 and the satellite cell 4, and a location threshold includes 800 km and 500 km. The terminal determines, based on the GNSS measurement information and location information of a reference point of the satellite cell 2 of the source satellite base station, that a relative location between the terminal and the satellite cell 2 is 850 km, which is greater than 800 km. The terminal determines, based on the GNSS measurement information and location information of a reference point of the satellite cell 3 of the target satellite base station, that a relative location between the terminal and the satellite cell 3 is 450 km. The terminal determines, based on the GNSS measurement information and location information of a reference point of the satellite cell 4 of the target satellite base station, that a relative location between the terminal and the satellite cell 4 is 550 km. In this case, the satellite cell 3 is a target cell, and the terminal sends a random access request to the satellite cell 3, so that the terminal switches from the satellite cell 2 to the satellite cell 3.

In another example, when the GNSS measurement information is invalid and within first duration, an accumulated TA of the source cell is obtained, and the mobility management is performed based on the second parameter.

Optionally, that the terminal apparatus performs mobility management based on the second parameter may include:

The terminal apparatus determines the target cell based on the signal quality threshold, the signal quality-based handover condition, signal quality of the source cell measured by the terminal apparatus, and signal quality of the candidate target cell measured by the terminal apparatus, and further sends a random access request to the target cell.

Specifically, the terminal apparatus may determine whether the signal quality of the source cell meets the signal quality-based handover condition. When the signal quality of the source cell meets the signal quality-based handover condition, the terminal apparatus may determine whether the signal quality of the candidate target cell meets the signal quality-based handover condition, determine a candidate target cell that meets the signal quality-based handover condition as the target cell, and send the random access request to the target cell. When the signal quality of the source cell does not meet the signal quality-based handover condition, the mobility management ends or mobility management is not performed.

In this application, the signal quality of the source cell may be determined based on reference signal received quality (reference signal received quality, RSRQ) of a reference signal of the source cell, and the RSRQ of the reference signal of the source cell indicates the signal quality of the source cell. Alternatively, the signal quality of the source cell may be determined based on reference signal received power (reference signal received power, RSRP) of a reference signal of the source cell, and the RSRP of the reference signal of the source cell indicates the signal quality of the source cell.

Similarly, in this application, the signal quality of the candidate target cell may be determined based on RSRQ of a reference signal of the candidate target cell, and the RSRQ of the reference signal of the candidate target cell indicates the signal quality of the candidate target cell. Alternatively, the signal quality of the candidate target cell may be determined based on RSRP of a reference signal of the candidate target cell, and the RSRP of the reference signal of the candidate target cell indicates the signal quality of the candidate target cell.

For example, when the second parameter includes one signal quality threshold, the terminal apparatus measures the signal quality of the source cell within the first duration when the GNSS measurement information is invalid, to determine whether the signal quality of the source cell is less than the signal quality threshold. When the signal quality of the source cell is less than the signal quality threshold, the terminal apparatus measures the signal quality of the candidate target cell to determine whether the signal quality of the candidate target cell is greater than or equal to the signal quality threshold. If at least one first candidate target cell whose signal quality is greater than or equal to the signal quality threshold exists in candidate target cells, any one of the at least one first candidate target cell is selected as the target cell, and the terminal apparatus sends the random access request to the target cell within the first duration based on the accumulated TA of the source cell. If no candidate target cell whose signal quality is greater than or equal to the signal quality threshold exists in the candidate target cells, the terminal apparatus does not perform mobility management or the terminal apparatus is further in the idle mode.

For another example, when the second parameter includes a signal quality threshold 1 and a signal quality threshold 2, the signal quality 1 is a signal quality threshold corresponding to the signal quality of the source cell, the signal quality 2 is a signal quality threshold corresponding to the signal quality of the target cell, the terminal apparatus measures the signal quality of the source cell within the first duration when the GNSS measurement information is invalid, to determine whether the signal quality of the source cell is less than the signal quality threshold 1. When the signal quality of the source cell is less than the signal quality threshold 1, the terminal apparatus measures the signal quality of the candidate target cell to determine whether the signal quality of the candidate target cell is greater than or equal to the signal quality threshold 2. If at least one first candidate target cell whose signal quality is greater than or equal to the signal quality threshold 2 exists in candidate target cells, any one of the at least one first candidate target cell is selected as the target cell, and the terminal apparatus sends the random access request to the target cell within the first duration based on the accumulated TA of the source cell. If no first candidate target cell whose signal quality is greater than or equal to the signal quality threshold 2 exists in the candidate target cells, the terminal apparatus does not perform mobility management or the terminal apparatus is further in the idle mode.

In a possible design, the terminal apparatus selects a first candidate target cell with best signal quality from the at least one first candidate target cell as the target cell, and sends the random access request to the target cell.

For example, the mobility management is cell handover, the terminal apparatus is the terminal in FIG. 2, the source cell is the satellite cell 2 in FIG. 2, candidate target cells configured by the source cell for the terminal include the satellite cell 3 and the satellite cell 4, and a signal quality threshold includes 6 dB and 10 dB. The terminal measures signal quality of the satellite cell 2 as 5 dB, which is less than 6 dB, the terminal measures signal quality of the satellite cell 3 as 15 dB, and the terminal measures signal quality of the satellite cell 4 as 11 dB, where both the signal quality of the satellite cell 3 and the signal quality of the satellite cell 4 are greater than 10 dB. Therefore, the terminal may send a random access request to the satellite cell 3 or the satellite cell 4 within the first duration based on the accumulated TA of the source cell.

The first duration is validity duration of a TAC, or is a part of the validity duration of the TAC. Uplink transmission of the terminal apparatus is valid within the first duration.

The TAC is used to prolong an interval between two consecutive GNSS measurements by the terminal apparatus, so that when the GNSS measurement information is invalid, the terminal apparatus may not immediately re-perform GNSS measurement, but may still perform uplink transmission within the validity duration of the TAC or the part of the validity duration of the TAC. When running of a timer corresponding to the TAC ends, the GNSS measurement is to be re-performed.

Optionally, the TAC may be carried in a random access response (random access response, RAR), or carried in a media access control-control element (media access control-control element, MAC CE). The timer corresponding to the TAC may also be referred to as a time maintenance timer (time alignment timer, TAT). Running duration of the TAT corresponds to validity duration of the uplink transmission of the terminal device, and the running duration of the TAT may also correspond to a validity period of the TAC. To be specific, the terminal device may perform uplink transmission during running of the TAT and/or within the validity period of the TAC; and the terminal device cannot perform uplink transmission when running of the TAT ends and/or beyond the validity period of the TAC.

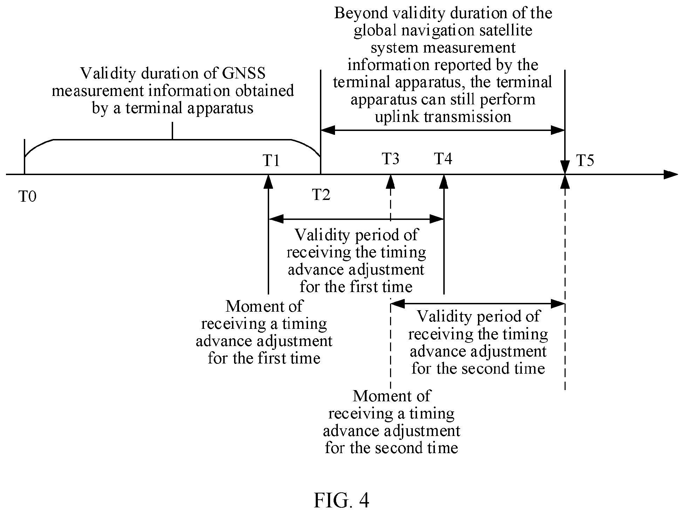

For example, FIG. 4 is a schematic flowchart of a TAC. The validity duration of the GNSS measurement information obtained by the terminal apparatus is from a moment T0 to a moment T2 in FIG. 4. The terminal apparatus receives, at the moment T1 for the first time, a TAC sent by a network apparatus corresponding to a serving cell. Running duration of a TAT corresponding to the TAC is from the moment T1 to a moment T4, that is, the terminal apparatus may perform uplink transmission between the moment T1 and the moment T4, and duration from the moment T1 to the moment T4 corresponds to a validity period of the TAC received for the first time. The terminal apparatus receives, at the moment T3 for the second time, a TAC sent by a network apparatus corresponding to a serving cell. Running duration of a TAT corresponding to the TAC is from the moment T3 to a moment T5, that is, the terminal apparatus may still perform uplink transmission between the moment T3 and the moment T5, and duration from the moment T3 to the moment T5 corresponds to a validity period of the TAC received for the second time. In addition, the GNSS measurement information obtained by the terminal apparatus in FIG. 4 is invalid at the moment T2, but the terminal apparatus can still perform uplink transmission in duration from the moment T2 to the moment T5 based on the two received TACs.

The TAC may be used to carry a TA. To ensure interference-free uplink transmission of different terminal apparatuses from a same cell, the network apparatus requires uplink signals that are of different terminal apparatuses and that are from a same subframe but from different frequency domain resources to be substantially time-aligned upon arrival at the network apparatus. Therefore, the network apparatus configures different TAs for different terminal apparatuses, so that the terminal apparatuses may send uplink data (for example, random access requests) to the network apparatus based on the TAs to achieve uplink synchronization. In random access, the network apparatus determines the TA by measuring a received random access (random access, RA) preamble (preamble), and sends the TA to the terminal apparatus via a TAC in a RAR. Although the terminal apparatus completes the uplink synchronization in random access, the location of the terminal apparatus and the like may change over time, so that the network apparatus providing services for the terminal apparatus needs to continuously maintain a TA to maintain uplink synchronization. In this case, the maintained TA may be sent to the terminal apparatus via a TAC in a MAC CE.

In this application, when first duration is the validity duration of the TAC, the first duration may be running duration of the TAT corresponding to the TAC. When the TAT corresponding to the TAC is running, the TAC is valid; and when the running of the TAT corresponding to the TAC ends, the TAC is invalid. It may be understood that, when the TAC is valid, the terminal apparatus can perform uplink transmission; and when the TAC is invalid, the terminal apparatus cannot perform uplink transmission.

In this application, when the first duration is the part of the validity duration of the TAC, the first duration may be remaining duration of the TAT corresponding to the TAC. When the remaining duration of the TAT corresponding to the TAC is not zero, the TAC is valid; and when the remaining duration of the TAT corresponding to the TAC is zero, the TAC is invalid.

In a possible design, the terminal apparatus receives indication information, where the indication information indicates that the terminal apparatus can continue uplink transmission after the GNSS measurement information is invalid. Therefore, the terminal apparatus receives the indication information correspondingly within the first duration when the GNSS measurement information is invalid. Specifically, when the GNSS measurement information is valid, the terminal apparatus receives the indication information indicating that the terminal apparatus can perform uplink transmission after the GNSS measurement information is invalid. In this case, the terminal apparatus may obtain the accumulated TA of the source cell when the GNSS measurement information is invalid, and perform mobility management based on the second parameter.

Optionally, within the first duration when the GNSS measurement information is invalid, if the remaining validity duration of the TAC exceeds a threshold, the terminal apparatus is triggered to obtain the accumulated TA of the source cell, and perform mobility management based on the second parameter.

In this application, when releasing a radio resource configured by the source cell for the terminal apparatus (for example, an RRC instruction sent by the source cell to the terminal apparatus), the terminal apparatus maintains the accumulated TA of the source cell, and maintains the remaining duration of the TAT corresponding to the TAC of the source cell. Specifically, the terminal apparatus receives, via the RAR or the MAC CE, a TA of the source cell carried in the TAC, accumulates the TA of the source cell received each time, and maintains the remaining duration of the TAT corresponding to the TAC.

In this application, that the terminal apparatus sends a random access cell to the target cell within the first duration when the GNSS measurement information is invalid may include: obtaining the accumulated TA of the source cell and the remaining duration of the TAT corresponding to the TAC of the source cell; and further sending the random access request to the target cell based on the accumulated TA of the source cell and the remaining duration of the TAT corresponding to the TAC of the source cell.

According to the communication method shown in FIG. 3, the terminal apparatus may perform mobility management based on an indication of the mobility management configuration information during long-time connection communication. Specifically, when the GNSS measurement information is valid, the terminal apparatus performs mobility management based on the location-based mobility management parameter; or within the first duration when the GNSS measurement information is invalid, the terminal apparatus obtains the accumulated TA of the source cell, and performs mobility management based on the signal quality-based mobility management parameter, where uplink transmission of the terminal apparatus is valid within the first duration. In this way, the terminal apparatus may flexibly select a target cell to be accessed, thereby increasing a probability of accessing an appropriate target cell.

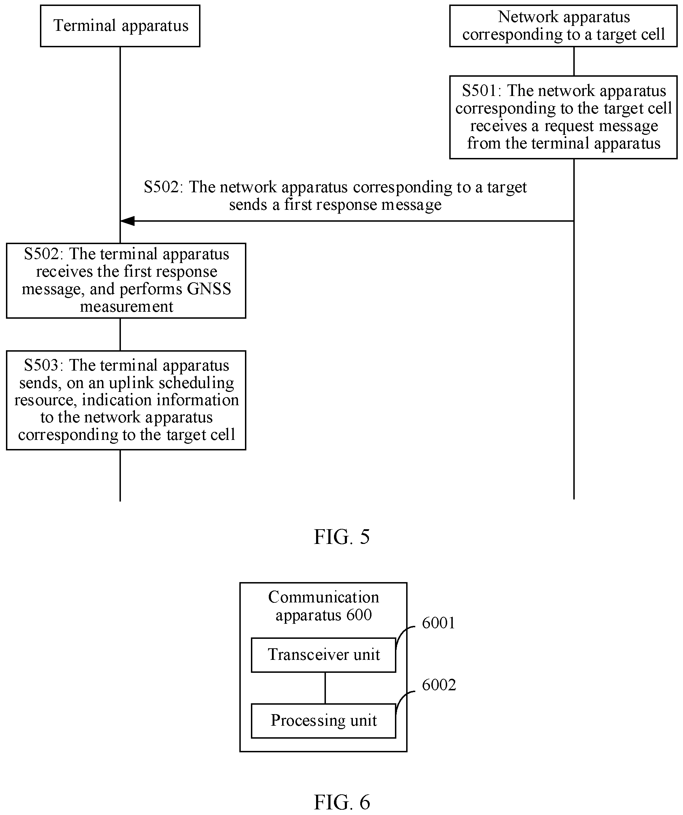

Optionally, after the terminal apparatus sends the random access request to the target cell, the method shown in FIG. 5 may be further included. FIG. 5 is a schematic flowchart of a communication method according to an embodiment of this application. As shown in FIG. 5, the method may include step S501 to step S503.

S501: A network apparatus corresponding to a target cell receives a request message from a terminal apparatus, where
the request message is used to request to configure GNSS measurement. The request message may be carried in a message3 (message3, MSG3) or an RRC connection setup request. The MSG3 is a 3^{rd} message in a random access procedure.

S502: The network apparatus corresponding to a target sends a first response message, and the terminal apparatus receives the first response message and performs the GNSS measurement.

The first response message is used to trigger the GNSS measurement. The first response message may be carried in downlink data, for example, a message 4 (message 4, MSG 4). The MSG 4 is a 4^{th} message in the random access procedure.

It may be understood that, when the terminal apparatus supports a feedback mechanism (for example, hybrid automatic repeat request (hybrid automatic repeat request, HARQ)), after receiving the response message in the downlink data, the terminal apparatus needs to send an acknowledgment message corresponding to the downlink data to the network apparatus corresponding to the target cell, to perform the GNSS measurement. When the terminal apparatus does not support the feedback mechanism, after receiving the response message in the downlink data, the terminal apparatus performs the GNSS measurement.

S503: The terminal apparatus sends, on an uplink scheduling resource, indication information to the network apparatus corresponding to the target cell.

Specifically, the terminal apparatus reports, to the network apparatus corresponding to the target cell, time required for performing the GNSS measurement; after the time required for performing the GNSS measurement, receives the uplink scheduling resource from the network apparatus corresponding to the target cell; and sends, on the uplink scheduling resource, the indication information to the network apparatus corresponding to the target cell, where the indication information indicates validity duration of GNSS measurement information. The indication information may be carried in a message5 (message5, MSG5). The MSG5 is a 5^{th} message in the random access procedure.

According to the method shown in FIG. 5, after accessing the target cell, the terminal apparatus requests the target cell to configure the GNSS measurement, and performs the GNSS measurement. The GNSS measurement does not need to be performed before a random access request to the target cell is sent. This ensures time validity of a measurement result of a neighboring cell, and reduces a delay of performing mobility management by the terminal apparatus.

Optionally, the terminal apparatus may send remaining running duration of a first timer to the network apparatus corresponding to the target cell.

Specifically, when releasing information configured by a source cell for the terminal apparatus, the terminal apparatus starts the first timer, and sends the remaining running duration of the first timer to the network apparatus corresponding to the target cell. Running duration of the first timer corresponds to remaining validity duration of a TAC.

When the terminal apparatus sends the remaining running duration of the first timer to the network apparatus corresponding to the target cell, the terminal apparatus may receive a second response message from the network apparatus corresponding to the target cell, where the second response message is used to trigger the GNSS measurement; receives a TAC from the network apparatus corresponding to the target cell; or performs GNSS measurement when a first moment arrives. The TAC is used to prolong duration of uplink transmission of the terminal apparatus.

The terminal apparatus may determine the first moment based on a moment at which the remaining running duration of the first timer is sent. For example, it is agreed in the protocol that the terminal apparatus starts to perform the GNSS measurement at a 10^{th} second after the moment at which the remaining running duration of the first timer is sent.

In a possible design, when sending the remaining running duration of the first timer to the network apparatus corresponding to the target cell, the terminal apparatus performs the GNSS measurement when a second moment arrives. The terminal apparatus may determine the second moment based on a moment at which the acknowledgment feedback sent by the network apparatus corresponding to the target cell is received. For example, it is agreed in the protocol that the terminal apparatus starts to perform the GNSS measurement at a 5^{th} second after the moment at which the acknowledgment feedback sent by the network apparatus corresponding to the target cell is received.

The foregoing mainly describes the solutions provided in embodiments of this application from a perspective of interaction between apparatuses. It may be understood that, to implement the functions in the foregoing embodiments, the apparatuses, for example, the terminal apparatus and a network apparatus (for example, the network apparatus corresponding to the source cell or the network apparatus corresponding to the target cell), include corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware in a manner of hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of the terminal apparatus, a network communication apparatus, and the like may be grouped based on the foregoing method examples. For example, each functional module may be grouped corresponding to each function, or two or more functions may be integrated into one processing module. The integrated module may be implemented in a form of hardware, or may be implemented in a form of a software functional module. It should be noted that, in embodiments of this application, module grouping is an example and is merely logical function grouping. During an actual implementation, there may be another grouping manner.

FIG. 6 shows a diagram of a communication apparatus 600. The apparatus 600 may be configured to perform the function of the terminal apparatus in the foregoing embodiments. In a possible implementation, the communication apparatus 600 shown in FIG. 6 includes a transceiver unit 6001 and a processing unit 6002.

The transceiver unit 6001 is configured to receive mobility management configuration information, where the mobility management configuration information indicates a first parameter and a second parameter, the first parameter is a location-based mobility management parameter, and the second parameter is a signal quality-based mobility management parameter; and for example, the transceiver unit 6001 may support the communication apparatus 600 in performing S302.

The processing unit 6002 is configured to perform mobility management based on the mobility management configuration information. For example, the processing unit 6002 may support the communication apparatus 600 in performing S303.

For related descriptions of the mobility management configuration information, the first parameter, the second parameter, and mobility management, refer to the descriptions in the foregoing method embodiments.

Specifically, all related content of the steps in the foregoing method embodiments shown in FIG. 3 may be cited in function descriptions of the corresponding functional modules. Details are not described herein again. The communication apparatus 600 is configured to perform a function of the terminal apparatus in the communication method shown in FIG. 3, and therefore can achieve a same effect as the foregoing communication method.

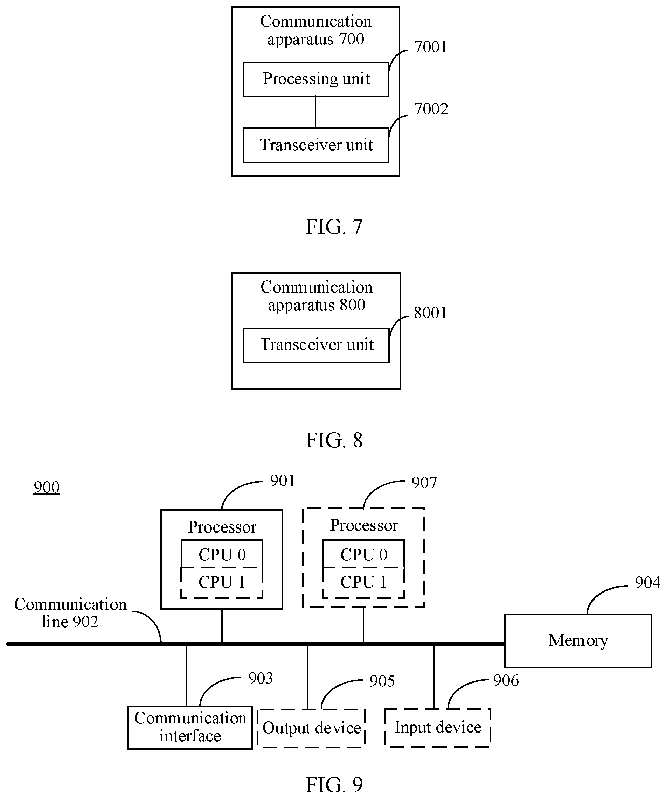

FIG. 7 shows a diagram of a communication apparatus 700. The communication apparatus 700 may be configured to perform the function of the network apparatus corresponding to the source cell in the foregoing embodiments. In a possible implementation, the communication apparatus 700 shown in FIG. 7 includes a processing unit 7001 and a transceiver unit 7002.

The processing unit 7001 is configured to obtain mobility management configuration information, where the mobility management configuration information indicates a first parameter and a second parameter, the first parameter is a location-based mobility management parameter, and the second parameter is a signal quality-based mobility management parameter. For example, the processing unit 7001 may be configured to support the communication apparatus 700 in performing S301.

The transceiver unit 7002 is configured to send the mobility management configuration information. For example, the transceiver unit 7002 may be configured to support the communication apparatus 700 in performing S302.

For related descriptions of the mobility management configuration information, the first parameter, and the second parameter, refer to the descriptions in the foregoing method embodiments.

Specifically, all related content of the steps in the foregoing method embodiments shown in FIG. 3 may be cited in function descriptions of the corresponding functional modules. Details are not described herein again. The communication apparatus 700 is configured to perform a function of the network apparatus corresponding to the source cell in the communication method shown in FIG. 3, and therefore can achieve a same effect as the foregoing communication method.

FIG. 8 shows a diagram of a communication apparatus 800. The communication apparatus 800 may be configured to perform the function of the network apparatus corresponding to the target cell in the foregoing embodiments. In a possible implementation, the communication apparatus 800 shown in FIG. 8 includes and a transceiver unit 8001.

The transceiver unit 8001 is configured to receive a request message used to request to configure GNSS measurement. For example, the transceiver unit 8001 may be configured to support the communication apparatus 800 in performing S501.

The transceiver unit 8001 is further configured to send a first response message used to trigger the GNSS measurement. For example, the transceiver unit 8001 may be configured to support the communication apparatus 800 in performing S502.

For related descriptions of the request message used to request to configure the GNSS measurement and the response message used to trigger the GNSS measurement, refer to the descriptions in the foregoing method embodiments.

Specifically, all related content of the steps in the foregoing method embodiments shown in FIG. 5 may be cited in function descriptions of the corresponding functional modules. Details are not described herein again. The communication apparatus 800 is configured to perform a function of the network apparatus corresponding to the target cell in the communication method shown in FIG. 5, and therefore can achieve a same effect as the foregoing communication method.

As mentioned above, the processing unit may be a processing module, or may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The transceiver unit may be a communication module, or may be a transceiver circuit, a communication interface, or the like. Any communication apparatus mentioned above may further include a storage unit, and the storage unit is configured to store program code and data of any communication apparatus. The storage unit may be a storage module, or may be a memory. When the processing module is the processor, the communication module is the communication interface, and the storage module is the memory, the communication apparatus 600, the communication apparatus 700 and the communication apparatus 800 in embodiments of this application may be the communication apparatus 900 shown in FIG. 9. For example, the terminal apparatus, the network apparatus corresponding to the source cell, and the network apparatus corresponding to the target cell mentioned above may use a composition structure shown in FIG. 9 or include components shown in FIG. 9. FIG. 9 is a diagram of a composition of a communication apparatus 900 according to an embodiment of this application. As shown in FIG. 9, the communication apparatus 900 may include a processor 901, a communication line 902, and a communication interface 903.

Further, the communication apparatus 900 may further include a memory 904. The processor 901, the memory 904, and the communication interface 903 may be connected to each other through the communication line 902.

The processor 901 may be a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor 901 may alternatively be another communication apparatus having a processing function, for example, a circuit, a device, or a software module.

The communication line 902 is configured to transfer information between components included in the communication apparatus 900.

The communication interface 903 is configured to communicate with another device or another communication network. The another communication network may be Ethernet, a radio access network (radio access network, RAN), a wireless local area network (wireless local area network, WLAN), or the like. The communication interface 903 may be a radio frequency module, a transceiver, or any communication apparatus that can implement communication. In embodiments of this application, an example in which the communication interface 903 is the radio frequency module is used for description. The radio frequency module may include an antenna, a radio frequency circuit, and the like. The radio frequency circuit may include a radio frequency integrated chip, a power amplifier, and the like.

The memory 904 is configured to store instructions. The instructions may be computer programs.

The memory 904 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another optical disc storage, an optical disc storage, a magnetic disk storage medium, or another magnetic storage device. The optical disc storage includes a compact optical disc, a laser disc, an optical disc, a digital general-purpose disc, a Blu-ray disc, or the like.

It should be noted that, the memory 904 may exist independently of the processor 901, or may be integrated with the processor 901. The memory 904 may be configured to store instructions, program code, some data, or the like. The memory 904 may be located in the communication apparatus 900, or may be located outside the communication apparatus 900. This is not limited. The processor 901 is configured to execute the instructions stored in the memory 904, to perform a method for sending a random access procedure preamble provided in the following embodiment of this application.

In an example, the processor 901 may include one or more CPUs, for example, a CPU 0 and a CPU 1 in FIG. 9.

In an optional implementation, the communication apparatus 900 includes a plurality of processors. For example, in addition to the processor 901 in FIG. 9, the communication apparatus 900 may further include a processor 907.

In an optional implementation, the communication apparatus 900 further includes an output device 905 and an input device 906. The input device 906 is a keyboard, a mouse, a microphone, a joystick, or the like, and the output device 905 is a device like a display or a speaker (speaker).

It should be noted that, the communication apparatus 900 may be a desktop computer, a portable computer, a network server, a mobile phone, a tablet computer, a wireless terminal, an embedded device, a chip system, or a device having a structure similar to that in FIG. 9. In addition, the composition structure shown in FIG. 9 does not constitute a limitation on the communication apparatus. In addition to the components shown in FIG. 9, the communication apparatus may include more or fewer components than those shown in FIG. 9, or some components may be combined, or there may be a different component layout.

In embodiments of this application, the chip system may include a chip, or may include a chip and another discrete device.

An embodiment of this application further provides a computer-readable storage medium. All or a part of the processes in method embodiments may be implemented by a computer program instructing relevant hardware. The program may be stored in the computer-readable storage medium. When the program runs, the processes in the method embodiments may be included. The computer-readable storage medium may be a terminal device in any one of the foregoing embodiments, for example, an internal storage unit including a data transmit end and/or a data receive end, such as a hard disk drive or a memory of the terminal device. Alternatively, the computer-readable storage medium may be an external storage device of the terminal device, for example, a plug-in hard disk drive, a smart media card (smart media card, SMC), a secure digital (secure digital, SD) card, a flash card (flash card), or the like that is configured on the terminal device. Further, the computer-readable storage medium may further include both an internal storage unit and an external storage device of the foregoing terminal device. The computer-readable storage medium is configured to store the computer program and other programs and data required by the foregoing terminal device. The computer-readable storage medium may be further configured to temporarily store data that has been output or is to be output.

It should be understood that, collection, storage, use, processing, transmission, provision, disclosure, and the like of personal user information in the technical solutions of this application all comply with related laws and regulations, and do not violate public order and good morals. For example, in the technical solutions in this application, the personal user information is processed with user authorization. This is uniformly described herein and is not described below.

It should be noted that, the terms "first", "second", and the like in the specification, claims, and accompanying drawings of this application are intended to distinguish between different objects, but are not intended to describe a specific order. In addition, the terms "include" and "have" and any other variants thereof are intended to cover a non-exclusive inclusion. For example, a process, a method, a system, a product, or a device that includes a series of steps or units is not limited to the steps or units that are listed, but optionally further includes the steps or units that are not listed, or optionally further includes other inherent steps or units of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

It should be understood that, in embodiments of this application, "B corresponding to A" indicates that B is associated with A. For example, B may be determined based on A. It should be further understood that, determining B based on A does not mean that B is determined based only on A. B may alternatively be determined based on A and/or other information. In embodiments of this application, "connection" means various connection manners such as a direct connection or an indirect connection, for implementing communication between devices. This is not limited in embodiments of this application.

Unless otherwise specified, in embodiments of this application, "transmission" (transmit/transmission) refers to bidirectional transmission, and includes a sending action and/or a receiving action. Specifically, in embodiments of this application, "transmission" includes data sending, data receiving, or data sending and data receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Based on the foregoing descriptions of implementations, a person skilled in the art may clearly understand that, for the purpose of convenient and brief description, grouping of the foregoing functional modules is used as an example for illustration. In actual application, the foregoing functions can be allocated to different functional modules and implemented based on a requirement, that is, an internal structure of an apparatus is grouped into different functional modules to implement all or some of the functions described above.

In the several embodiments provided in this application, it may be understood that, the disclosed communication apparatus and method may be implemented in other manners. For example, the described communication apparatus embodiments are merely examples. For example, the grouping of modules or units is an example and is merely logical function grouping. During an actual implementation, there may be another grouping manner. For example, a plurality of units or components may be combined or integrated into another apparatus, or some features may be ignored or may not be performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed on different places. A part or all of the units may be selected based on an actual requirement to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes several instructions for instructing a device, for example, a single-chip microcomputer or a chip, or a processor (processor) to perform all or some of the steps of the methods in embodiments of this application. The foregoing storage medium includes any medium that stores program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving mobility management configuration information, wherein the mobility management configuration information indicates a first parameter and a second parameter, the first parameter is a location-based mobility management parameter, and the second parameter is a signal quality-based mobility management parameter; and
performing mobility management based on the mobility management configuration information.

2. The method according to claim 1, wherein the performing mobility management based on the mobility management configuration information comprises:
performing mobility management based on the first parameter when GNSS measurement information is valid; and
performing mobility management based on the second parameter when the GNSS measurement information is invalid and within first duration, wherein uplink transmission is valid within the first duration.

3. The method according to claim 2, wherein the performing mobility management based on the second parameter within the first duration when the GNSS measurement information is invalid comprises:
obtaining an accumulated timing advance TA of a source cell; and
performing mobility management based on the accumulated timing advance TA of the source cell.

4. The method according to claim 2 or 3, wherein
the first duration is validity duration of a timing advance command TAC; or
the first duration is a part of validity duration of a timing advance command TAC.

5. The method according to any one of claims 1 to 4, wherein the method further comprises:
sending a request message to a network apparatus corresponding to a target cell, wherein the request message is used to request to configure GNSS measurement; and
receiving a first response message from the network apparatus corresponding to the target cell, wherein the first response message is used to trigger the GNSS measurement.

6. The method according to claim 5, wherein
the request message is carried in a message MSG3 or a radio resource control RRC connection setup request.

7. The method according to claim 5, wherein the first response message is carried in downlink data.

8. The method according to claim 2 or 3, wherein the method further comprises:
releasing information, in a terminal apparatus, configured by the source cell for the terminal apparatus, and starting a first timer, wherein running duration of the first timer corresponds to remaining validity duration of a TAC.

9. The method according to claim 8, wherein the method further comprises:
sending remaining running duration of the first timer to a network apparatus corresponding to a target cell.

10. The method according to claim 9, wherein the method further comprises:
receiving a second response message from the network apparatus corresponding to the target cell, wherein the second response message is used to trigger GNSS measurement;
receiving a timing advance command TAC from the network apparatus corresponding to the target cell, wherein the TAC is used to prolong duration of uplink transmission; or
performing GNSS measurement when a first moment arrives, wherein the first moment is determined based on a moment at which the remaining running duration of the first timer is sent.

11. The method according to any one of claims 1 to 7, wherein the method further comprises:
reporting, to the network apparatus corresponding to the target cell, time required for performing the GNSS measurement;
receiving an uplink scheduling resource from the network apparatus corresponding to the target cell after the time required for performing the GNSS measurement; and
sending, on the uplink scheduling resource, indication information to the network apparatus corresponding to the target cell, wherein the indication information indicates validity duration of the GNSS measurement information.

12. The method according to claim 11, wherein the indication information is carried in a message MSG5.

13. A communication method, wherein the method comprises:
obtaining mobility management configuration information, wherein the mobility management configuration information indicates a first parameter and a second parameter, the first parameter is a location-based mobility management parameter, and the second parameter is a signal quality-based mobility management parameter; and
sending the mobility management configuration information.

14. A communication method, wherein the method comprises:
receiving a request message, wherein the request message is used to request to configure GNSS measurement; and
sending a first response message, wherein the first response message is used to trigger the GNSS measurement.

15. The method according to claim 14, wherein
the request message is carried in a message MSG3 or a radio resource control RRC connection setup request.

16. The method according to claim 15, wherein the first response message is carried in downlink data.

17. The method according to claim 14, wherein the method further comprises:
receiving remaining running duration of a first timer, wherein
running duration of the first timer corresponds to remaining validity duration of a timing advance command TAC.

18. The method according to claim 17, wherein the method further comprises:
sending a second response message, wherein the second response message is used to trigger the GNSS measurement; or
sending a timing advance command TAC, wherein the TAC is used to prolong duration of uplink transmission.

19. The method according to any one of claims 14 to 18, wherein the method further comprises:
receiving, from a terminal apparatus, time required for the GNSS measurement;
sending an uplink scheduling resource to the terminal apparatus after the time required for performing the GNSS measurement; and
receiving, on the uplink scheduling resource, indication information from the terminal apparatus, wherein the indication information indicates validity duration of the GNSS measurement.

20. The method according to claim 19, wherein the indication information is carried in a message MSG5.

21. A communication apparatus, wherein the communication apparatus comprises:
a transceiver unit, configured to receive mobility management configuration information, wherein the mobility management configuration information indicates a first parameter and a second parameter, the first parameter is a location-based mobility management parameter, and the second parameter is a signal quality-based mobility management parameter; and
a processing unit, configured to perform mobility management based on the mobility management configuration information.

22. A communication apparatus, wherein the communication apparatus comprises:
a processing unit, configured to obtain mobility management configuration information, wherein the mobility management configuration information indicates a first parameter and a second parameter, the first parameter is a location-based mobility management parameter, and the second parameter is a signal quality-based mobility management parameter; and
a transceiver unit, configured to send the mobility management configuration information.

23. A communication apparatus, wherein the communication apparatus comprises:
a transceiver unit, configured to receive a request message, wherein the request message is used to request to configure GNSS measurement, wherein
the transceiver unit is further configured to send a first response message, wherein the first response message is used to trigger the GNSS measurement.

24. A communication apparatus, wherein the communication apparatus comprises a processor and a communication interface, and the processor and the communication interface are configured to support the communication apparatus in performing the communication method according to any one of claims 1 to 12, performing the method according to claim 13, or performing the method according to any one of claims 14 to 20.

25. A communication system, wherein the communication system comprises the communication apparatus according to claim 21, the communication apparatus according to claim 22, and the communication apparatus according to claim 23.

26. A computer-readable storage medium, wherein the computer-readable storage medium stores computer instructions, and when the computer instructions are run on a computer, the computer is caused to perform the method according to any one of claims 1 to 12, the computer is caused to perform the method according to claim 13, or the computer is caused to perform the method according to any one of claims 14 to 20.

27. A computer program product, wherein the computer program product comprises computer instructions, and when the computer instructions are run on a computer, the computer is caused to perform the method according to any one of claims 1 to 12, the computer is caused to perform the method according to claim 13, or the computer is caused to perform the method according to any one of claims 14 to 20.
